# EUROPÄISCHE PATENTSCHRIFT

(11) **EP 2 927 472 B1**
(45) Veröffentlichungstag und Bekanntmachung des Hinweises auf die Patenterteilung: **25.10.2017**
(21) Anmeldenummer: 15157909.1
(22) Anmeldetag: 06.03.2015
(51) Int. Cl.: F02M 55/00, F16L 37/088

(54) **Steckverbinder**
Connector
Connecteur à fiches

(30) Priorität: 13.03.2014 DE 102014103405
(43) Veröffentlichungstag der Anmeldung: 07.10.2015
(73) Patentinhaber: VERITAS AG, 63571 Gelnhausen (DE)
(72) Erfinder: Scheicher, Steffen, 63599 Biebergemünd (DE); Emmerling, Alexander, 55116 Mainz (DE); Cöl, Isa, 60385 Frankfurt (DE)
(74) Vertreter: Patentship Patentanwaltsgesellschaft mbH

(56) Entgegenhaltungen:
- EP-A1- 2 644 957
- DE-A1-102012 005 929
- US-A1- 2003 052 484

## Beschreibung

Die vorliegende Erfindung betrifft einen Steckverbinder zum Herstellen einer Fluidverbindung. Die Druckschrift DE 10 2012 005 929 A1 beschreibt eine Steckverbindungsanordnung zum lösbaren Verbinden von Fluidleitungen. Zum Verriegeln der Steckverbindungsanordnung befindet sich ein Fixierelement in einer Einschuböffnung. Das Fixierelement wird aus der radialen Einschuböffnung herausgezogen, um die Steckverbindung zerstörungsfrei zu lösen.

In der Druckschrift EP 2 644 957 A1 ist eine Steckverbindungsanordnung zum lösbaren Verbinden von Fluidleitungen offenbart.

Die Druckschrift US 2003/0052484 A1 offenbart eine Versorgungsanschlusseinrichtung für ein Flüssigkeitsdrucksystem.

Es ist die der Erfindung zugrundeliegende Aufgabe, einen Steckverbinder für eine Fluidleitung anzugeben, der auf einfachere Weise gelöst werden kann.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche. Die Aufgabe wird durch einen Steckverbinder zum Herstellen einer Fluidverbindung gelöst, mit einem Einsteckstutzen zum Einsetzen in einen Anschlussstutzen, der eine außen umlaufende Nut umfasst; einer Feder zum Verriegeln des Einsteckstutzens an dem Anschlussstutzen, die einen ersten Federabschnitt zum Eingreifen in eine erste Seite der Nut des Anschlussstutzens, einen zweiten Federabschnitt zum Eingreifen in eine zweite Seite der Nut des Anschlussstutzens und einen Druckabschnitt zum Drücken der Feder in Richtung des Einsteckstutzens umfasst; und einem Anschlag zum Spreizen des ersten und des zweiten Federabschnittes beim Drücken des Druckabschnittes. Dadurch wird der technische Vorteil erreicht, dass eine leichte Montage und Demontage des Steckverbinders erreicht wird. Der erste Federabschnitt und der zweite Federabschnitt sind über kreuz federnd mit dem Druckabschnitt verbunden, und der Anschlag ist derart angeordnet, dass beim Drücken auf den Druckabschnitt eine Hebelübersetzung auf den ersten Federabschnitt und den zweiten Federabschnitt ausgeübt wird. Damit wird eine Verringerung der notwendigen Kraft erreicht und ein leichtgängiges Entriegeln des Steckverbinders ermöglicht. In einer weiteren vorteilhaften Ausführungsform des Steckverbinders ist die Feder aus gebogenem Runddraht gebildet. Dadurch wird beispielsweise der technische Vorteil erreicht, dass die Feder auf einfache Weise herstellbar ist.

In einer weiteren vorteilhaften Ausführungsform des Steckverbinders umfasst der Steckverbinder einen Sicherungsvorsprung zum Fixieren der Feder gegen ein Herausziehen. Dadurch wird beispielsweise der technische Vorteil erreicht, dass ein ungewolltes Herausrutschen der Feder verhindert wird.

In einer weiteren vorteilhaften Ausführungsform des Steckverbinders ist der Sicherungsvorsprung keilförmig ausgebildet, so dass die Feder beim Einsetzen in den Steckverbinder über den Sicherungsvorsprung gleiten kann. Dadurch wird beispielsweise der technische Vorteil erreicht, dass die Montage der Feder vereinfacht wird.

In einer weiteren vorteilhaften Ausführungsform des Steckverbinders umfasst der Steckverbinder einen Abstandshalter zum gegenseiteigen Beabstanden des ersten Federabschnitts und des zweiten Federabschnitts. Dadurch wird beispielsweise der technische Vorteil erreicht, dass sich die Federabschnitte in einer definierten Ruhelage befinden. Dadurch können sich die Federabschnitte beim Aufsetzen des Steckverbinders auf den Anschlussstutzen automatisch spreizen, bis diese in der umlaufenden Nut einrasten.

In einer weiteren vorteilhaften Ausführungsform des Steckverbinders ist der Abstandshalter auf einer Seite des Steckverbinders angeordnet, die dem Druckabschnitt gegenüberliegt. Dadurch wird beispielsweise der technische Vorteil erreicht, dass sich die Federabschnitte exakt positionieren lassen.

In einer weiteren vorteilhaften Ausführungsform des Steckverbinders umfasst der Steckverbinder einen ersten Anschlag zum Spreizen des ersten Federabschnitts und einen zweiten Anschlag zum Spreizen des zweiten Federabschnitts. Dadurch wird beispielsweise der technische Vorteil erreicht, dass für jeden Federabschnitt ein separater Anschlag gebildet wird, über den jeweils eine hohe Hebelübersetzung erreicht wird.

In einer weiteren vorteilhaften Ausführungsform des Steckverbinders wird der Druckabschnitt durch einen geraden Abschnitt der Feder gebildet. Dadurch wird beispielsweise der technische Vorteil erreicht, dass die Feder manuell mit einer hohen Kraft gedrückt werden kann.

In einer weiteren vorteilhaften Ausführungsform des Steckverbinders umfasst der Steckverbinder ein Federgehäuse zum Aufnehmen der Feder. Dadurch wird beispielsweise der technische Vorteil erreicht, dass ein versehentliches Beschädigen der Feder vor oder während der Montage verhindert wird.

In einer weiteren vorteilhaften Ausführungsform des Steckverbinders umfasst das Federgehäuse eine bogenförmige Ausnehmung im Bereich des Druckabschnittes. Dadurch wird beispielsweise der technische Vorteil erreicht, dass die Feder vollständig bis auf den Druckabschnitt umgeben ist.

In einer weiteren vorteilhaften Ausführungsform des Steckverbinders ist das Federgehäuse seitlich geschlossen. Dadurch wird beispielsweise der technische Vorteil erreicht, dass ein seitliches Eindringen von Schmutz verhindert wird.

In einer weiteren vorteilhaften Ausführungsform des Steckverbinders umfasst der Steckverbinder Stutzrippen zum Abstützen des Steckverbinders an dem Anschlussstutzen. Dadurch wird beispielsweise der technische Vorteil erreicht, dass das Aufstecken des Steckverbinders durch eine Selbstzentrierung erleichtert wird.

In einer weiteren vorteilhaften Ausführungsform des Steckverbinders umfasst der Anschlag eine Zentrierrippe zum Abstützen des Steckverbinders an dem Anschlussstutzen. Dadurch wird beispielsweise der technische Vorteil erreicht, dass die Zentrierrippen vollumfänglich um die Öffnung zum Einsetzen des Anschlussstutzens herum angeordnet werden können. Zudem wird die Stabilität des Anschlags durch die Zentrierrippe verbessert. Der Anschlag kann nahe der Öffnung zum Einsetzen des Anschlussstutzens angeordnet sein. Ausführungsbeispiele der Erfindung sind in den Zeichnungen dargestellt und werden im Folgenden näher beschrieben.

Es zeigen:
- Fig. 1: eine perspektivische Ansicht eines Steckverbinders;
- Fig. 2: eine weitere perspektivische Ansicht des Steckverbinders;
- Fig. 3: eine weitere perspektivische Ansicht des Steckverbinders mit nicht montierter Feder;
- Fig. 4: eine Untersicht auf den Steckverbinder;
- Fig. 5a: eine Querschnittsansicht durch den Steckverbinder in verriegeltem Zustand;
- Fig. 5B: eine Querschnittsansicht durch den Steckverbinder in entriegeltem Zustand;
- Fig. 6: eine weitere perspektivische Ansicht des Steckverbinders; und
- Fig. 7: eine perspektivische Ansicht auf die Feder.

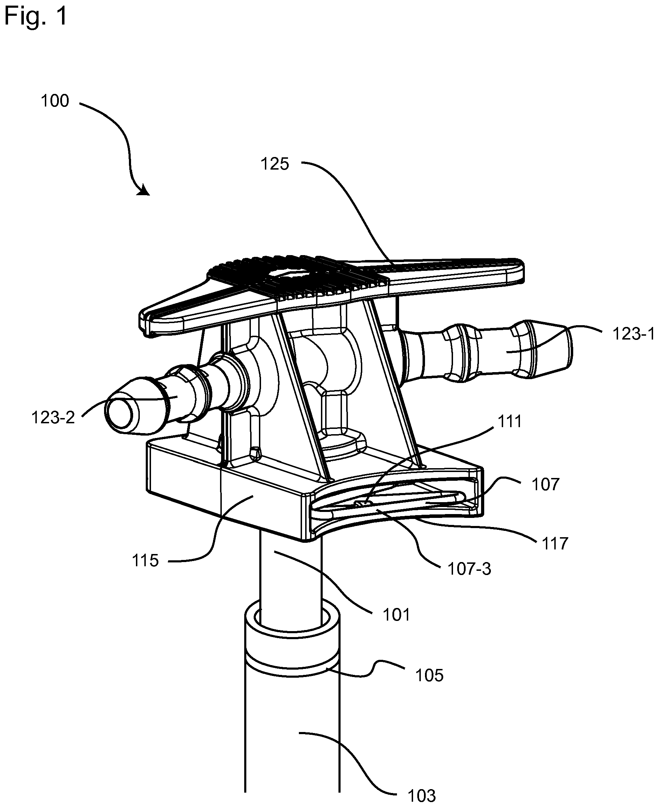

Fig. 1 zeigt eine perspektivische Ansicht eines Steckverbinders 100. Der Steckverbinder 100 dient zum Herstellen einer Fluidverbindung, wie beispielsweise für eine Kraftstoffleitung in einem Motor eines Kraftfahrzeugs.

Der Steckverbinder 100 umfasst einen Einsteckstutzen 101 zum Einsetzen in einen Anschlussstutzen 103. Der Anschlussstutzen 103 umfasst eine außen umlaufende Nut 105. Eine Feder 107 dient zum Verriegeln des Einsteckstutzens 101 an dem Anschlussstutzen 103, indem diese in die Nut 105 des Anschlussstutzens 103 eingreift und den Steckverbinder 100 verriegelt. Wird die Feder 107 durch Drücken eines Druckabschnittes 107-3 betätigt, wird die Verriegelung des Steckverbinders 100 gelöst. Der Steckverbinder 100 kann so von dem Anschlussstutzen heruntergezogen werden.

Die Feder 107 ist im Inneren eines Federgehäuses 115 angeordnet, das eine bogenförmige Ausnehmung 117 im Bereich des Druckabschnittes 107-3 der Feder 107 umfasst. Die bogenförmige Ausnehmung 117 erlaubt ein manuelles Drücken des Druckabschnittes 107-3 in Richtung des Einsteckstutzens 101.

Das Federgehäuse 115 bildet eine Einhausung, durch die die Feder 107 komplett geschützt ist. Dadurch kann ein Hängenbleiben bei der Montage und ein versehentliches Beschädigen der Feder 107 vor oder während der Montage verhindert werden. Eine versehentliche Entriegelung der Feder 107 ist nicht möglich. Im Inneren des Federgehäuses 115 ist ein Sicherungsvorsprung 111 angeordnet, an dem die Feder 107 anliegt. Dadurch wird die Feder 107 gegen ein Herausziehen aus dem Federgehäuse 115 gesichert.

Der Einsteckstutzen 101 ist T-förmig mit zwei seitlich herausragenden Seitenstutzen 123-1 und 123-2 verbunden, die zum Aufstecken von Schlauchleitungen dienen. Die beiden Seitenstutzen 123-1 und 123-2 sind in einem stumpfen Winkel zueinander angeordnet. Oberhalb der beiden Seitenstutzen 123-1 und 123-2 ist eine flügelartige Schutzplatte 125 angeordnet, die die beiden abgewinkelten Seitenstutzen 123-1 und 123-2 überdeckt. Die Schutzplatte 125 ist über senkrechte Stützflächen mit den beiden Seitenstutzen 123-1 und 123-2 verbunden.

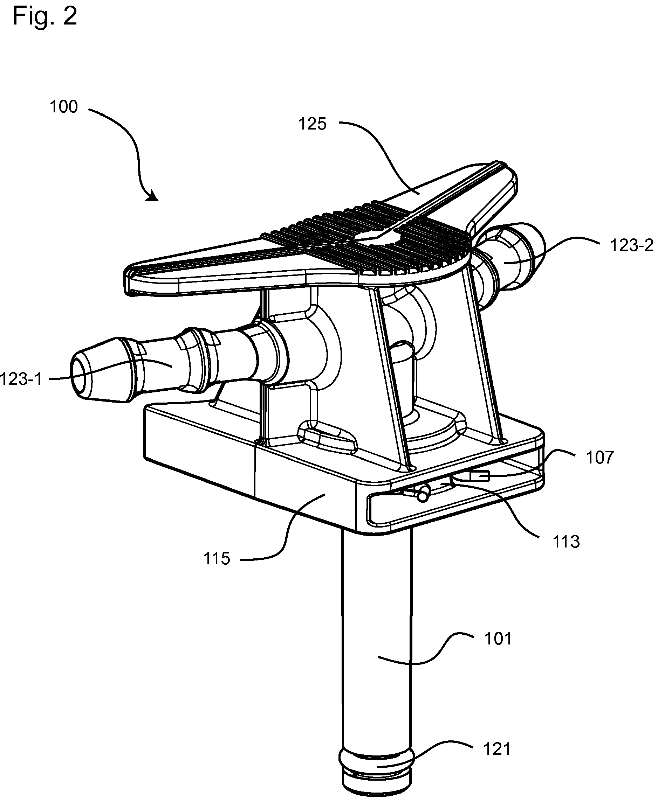

Fig. 2 zeigt eine weitere perspektivische Ansicht des Steckverbinders 100. Der Einsteckstutzen 101 umfasst einen Dichtungsring 121 zum Abdichten des Zwischenraums zwischen dem Einsteckstutzen 101 und dem Anschlussstutzen 103. In dem Federgehäuse 115 ist ein Abstandshalter 113 auf einer Seite angeordnet ist, die dem Druckabschnitt 107-3 gegenüberliegt.

Die flügelartige Schutzplatte 125 über den Seitenstutzen 123-1 und 123-2 ergibt eine größere Druckfläche für eine Montage und schützt die Seitenstutzen 123-1 und 123-2 vor einer Beschädigung. Die Seitenstutzen 123-1 und 123-2 sind ebenfalls über senkrechte Stützflächen mit dem Federgehäuse 115 verbunden. Zusätzlich sind die Schutzplatte 125 und die Seitenstutzen 123-1 und 123-2 über trapezartige Stutzflächen mit dem Federgehäuse 115 verbunden. Die trapezartigen Stutzflächen sind senkrecht zu den Stutzflächen angeordnet, die die Schutzplatte 125 an den Seitenstutzen 123-1 und 123-2 abstützen. Durch diesen gerüstartigen Aufbau wird eine hohe Stabilität des Steckverbinders 100 erreicht.

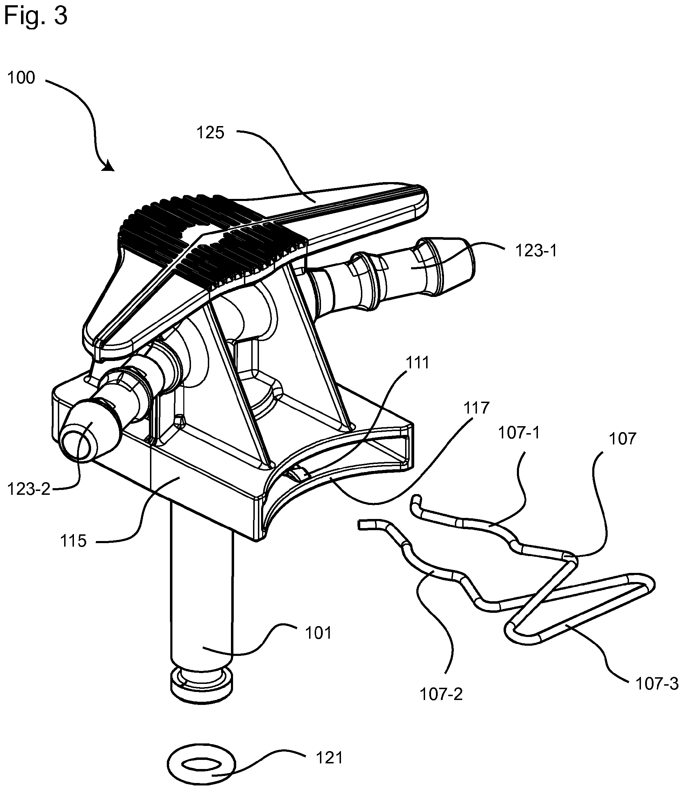

Fig. 3 zeigt eine weitere perspektivische Ansicht des Steckverbinders 100 mit herausgezogener Feder 107. Die Feder 107 umfasst zwei gegenüber liegende Federabschnitte 107-1 und 107-2 zum Eingreifen in die Nut 105 des Anschlussstutzens 103. Die beiden Federabschnitte 107-1 und 107-2 sind über kreuz federnd mit dem Druckabschnitt 107-3 der Feder 107 verbunden.

Bei der Herstellung des Steckverbinders wird die Feder 107 von Außen in das Federgehäuse 115 geschoben. Dabei gleitet die Feder 107 über den keilförmig ausgebildeten Sicherungsvorsprung 111 und wird anschließend durch den Sicherungsvorsprung 111 innerhalb des Federgehäuses 115 fixiert.

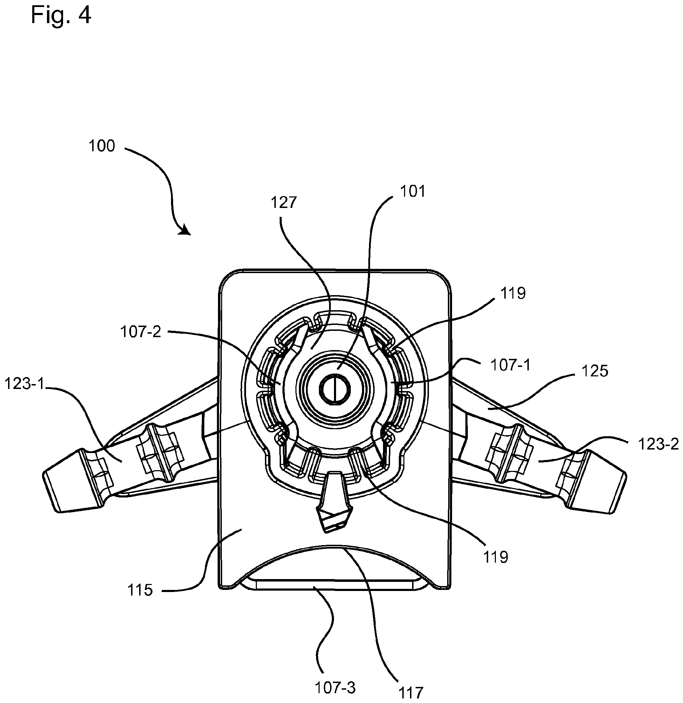

Fig. 4 zeigt eine Untersicht auf den Steckverbinder 100. Das Federgehäuse 115 umfasst eine Öffnung 127, in der der Anschlussstutzen 103 eingesetzt wird. Nach dem Einsetzen des Anschlussstutzens 103 befindet sich die Nut 105 im Inneren des Federgehäuses 115. Die beiden Federabschnitte 107-1 und 107-2 greifen beiderseits in die Nut 105 ein. Im Inneren des Federgehäuses 115 sind Zentrierrippen 119 angeordnet, die ein Aufstecken durch Selbstzentrierung des Steckverbinders 100 erleichtern und das radiale Spiels reduzieren. Die Zentrierrippen 119 sind gleichmäßig um die Öffnung 127 herum angeordnet und ragen vom Rand der Öffnung 127 radial nach Innen. Im Bereich der Federabschnitte 107-1 und 107-2 sind die Zentrierrippen 119 unterbrochen, so dass sich die Federabschnitte 107-1 und 107-2 seitlich nach außen bewegen können.

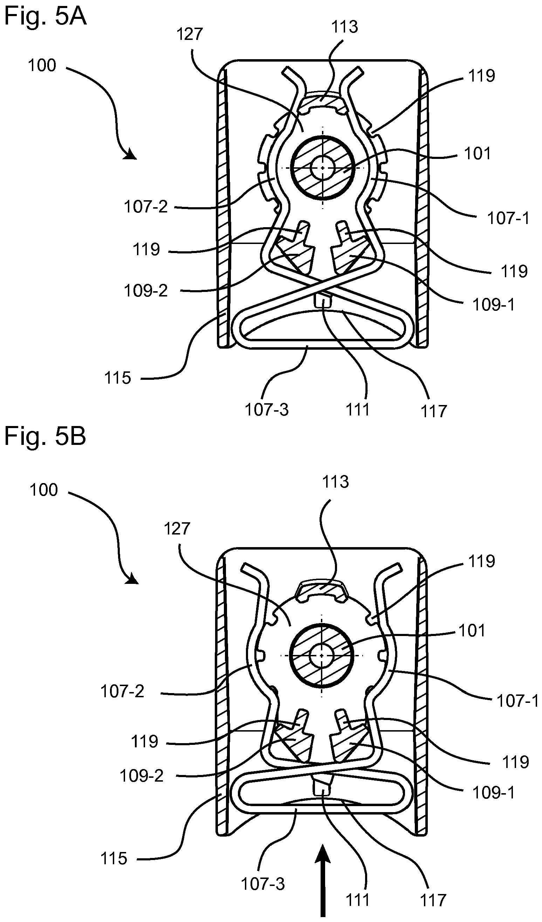

Fig. 5a zeigt eine Querschnittsansicht durch den Steckverbinder 100 in verriegeltem Zustand der Feder 107. Die Federabschnitte 107-1 und 107-2 sind über Kreuz mit dem Druckabschnitt 107-3 der Feder 107 verbunden. Durch die gekreuzte Anordnung der Federabschnitte 107-1 und 107-2 wird beim Drücken des Druckabschnittes 107-3 eine bessere Hebelübersetzung erreicht. Dies ermöglicht eine leichtere Montage/Demontage des Steckverbinders.

Das Federgehäuse 115 umfasst die beiden Anschläge 109-1 und 109-2. Der Federabschnitt 107-1 liegt an dem Anschlag 109-1 an und der Federabschnitt 107-2 liegt an dem Anschlag 109-2 an. Der Anschlag 109-1 dient zum Spreizen des Federabschnitts 107-1. Der Anschlag 109-2 dient zum Spreizen des Federabschnitts 107-2. Die beiden Anschläge 109-1 und 109-2 sind im Querschnitt dreiecksförmig, so dass die Bewegung der Federabschnitte 107-1 und 107-2 nicht beeinträchtigt wird. Die Anschläge 109-1 und 109-2 sind jeweils integral mit einer Zentrierrippe 119 ausgebildet. Dadurch können die Anschläge 109-1 und 109-2 unmittelbar am Rand der Öffnung 127 angeordnet sein. Durch die gemeinsame Ausbildung der Anschläge 109-1 und 109-2 mit der Zentrierrippe 119 steigt sowohl die Festigkeit der Zentrierrippe 119 als auch der Anschläge 109-1 und 109-2.

In der Ruhelage liegen die beiden Federabschnitte 107-1 und 107-2 an dem Abstandshalter 113 an. Der Abstandshalter 113 ist an einer gegenüberliegenden Seite zu den Anschlägen 109-1 und 109-2 innerhalb des seitlich geschlossenen Federgehäuses 115 angeordnet. Dadurch kann in der Ruhelage eine vorgegebene Position der Federabschnitte 107-1 und 107-2 gewährleistet werden. Weist der Anschlussstutzen 103 einen geneigten Rand auf, gleiten die Federabschnitte 107-1 und 107-2 beim Aufschieben des Steckverbinders selbsttätig in die Nut 105.

Fig. 5B zeigt eine Querschnittsansicht durch den Steckverbinder in entriegeltem Zustand der Feder 107. Die Entriegelung entsteht durch manuelles Drücken des Druckabschnittes 107-3 in Pfeilrichtung in die bogenförmige Ausnehmung 117. Der Druckabschnitt 107-3 wird dabei in Richtung des Einsteckstutzens 101 verschoben. Dabei werden die beiden Federabschnitte 107-1 und 107-2 nach außen gedrückt und bewegen sich aus der Nut 105 des Anschlussstutzens 103. Der Steckverbinder 100 wird freigegeben und kann von dem Anschlussstutzen 103 heruntergezogen werden.

Der Anschlag 109-2 für den Federabschnitt 107-2 ist auf einer linken Seite des Federgehäuses 115 angeordnet. Dadurch dass der rechte Federabschnitt 107-1 mit der linken Seite des Druckabschnitts 107-3 verbunden ist und der linke Federabschnitt 107-2 mit der rechten Seite des Druckabschnitts 107-3 verbunden ist, kann über die beiden Anschläge 109-1 und 109-2 auf geringem Raum eine hohe Hebelübersetzung zum Spreizen der Feder 107 erzeugt werden. Der Anschlag 109-1 für den Federabschnitt 107-1 ist auf einer rechten Seite des Federgehäuses 115 angeordnet.

Dies ermöglicht eine einfache Demontage und leichtgängige Entriegelung des Steckverbinders 100 durch einfaches Drücken der Feder 107. Nach dem Loslassen des Druckabschnitts 107-3 kehrt die Feder 107 selbstständig in Ausgangslage zurück, in der die beiden Federabschnitte 107-1 und 107-2 an dem Abstandshalter 113 anliegen.

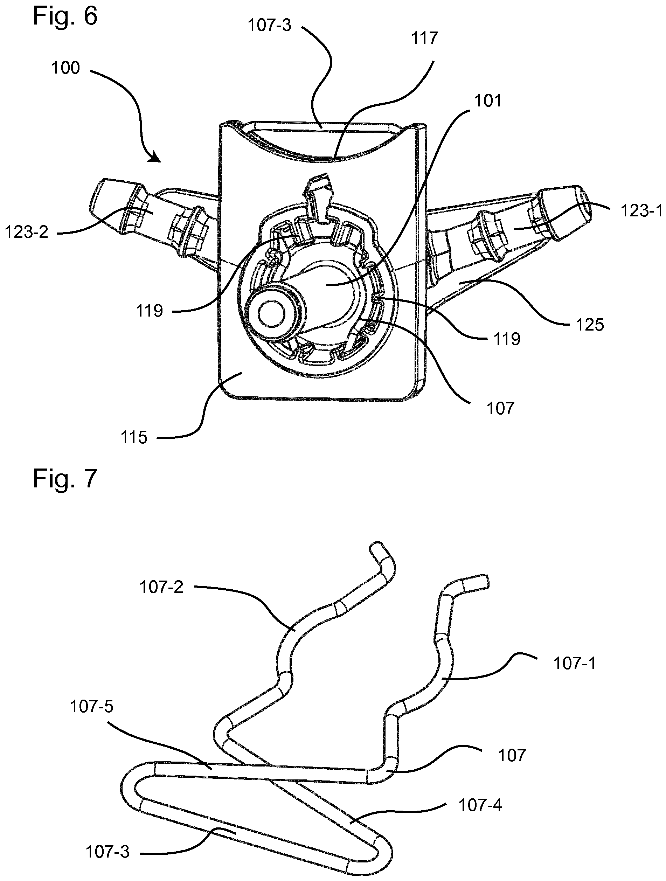

Fig. 6 zeigt eine weitere perspektivische Ansicht des Steckverbinders 100. Die Feder 107 bewegt sich beim Aufsetzen auf den Anschlussstutzen 103 selbstständig zur Seite. Der zylindrische Einsteckstutzen 101 ragt senkrecht aus der Mitte der Öffnung des Federgehäuses 115 heraus. Die umfangseitig angeordneten Zentrierrippen 119 liegen nach dem Aufsetzen an der Außenseite des Anschlussstutzens 103 an.

Fig. 7 zeigt eine perspektivische Ansicht auf die Feder 107. Die Federabschnitte 107-1 und 107-2 umfassen einen kreissegmentförmigen Abschnitt mit einem Radius, der dem Radius der Nut 105 des Anschlussstutzens 103 entspricht. Die Enden der Federabschnitte 107-1 und 107-2 sind nach außen hin abgebogen. Die abgebogenen Enden stoßen beim Drücken der Feder 107 an den Seitenwänden des Federgehäuses 115 an, so dass ein Überdehnen der Feder 107 vermieden wird.

Der rechte Federabschnitt 107-1 ist mit dem geraden Verbindungsabschnitt 107-5 mit der linken Seite des geraden Druckabschnittes 107-3 federnd verbunden. Der linke Federabschnitt 107-2 ist mit dem geraden Verbindungsabschnitt 107-4 mit der rechten Seite des geraden Druckabschnittes 107-3 federnd verbunden. Die Verbindungsabschnitte 107-4 und 107-5 kreuzen sich in der Mitte der Feder 107. Über die Verbindungsabschnitte 107-4 und 107-5 wird über die Anschläge 109-1 und 109-2 die Hebelübersetzung ausgeübt.

### BEZUGSZEICHENLISTE

- 100: Steckverbinder
- 101: Einsteckstutzen
- 103: Anschlussstutzen
- 105: Nut
- 107: Feder
- 107-1: Federabschnitt
- 107-2: Federabschnitt
- 107-3: Druckabschnitt
- 107-4: Verbindungsabschnitt
- 107-5: Verbindungsabschnitt
- 109-1: Anschlag
- 109-2: Anschlag
- 111: Sicherungsvorsprung
- 113: Abstandshalter
- 115: Federgehäuse
- 117: Ausnehmung
- 119: Zentrierrippe
- 121: Dichtungsring
- 123-1: Seitenstutzen
- 123-2: Seitenstutzen
- 125: Schutzplatte
- 127: Öffnung

## Patentansprüche

1. Steckverbinder (100) zum Herstellen einer Fluidverbindung, mit:
einem Einsteckstutzen (101) zum Einsetzen in einen Anschlussstutzen (103), der eine außen umlaufende Nut (105) umfasst;
einer Feder (107) zum Verriegeln des Einsteckstutzens (101) an dem Anschlussstutzen, die einen ersten Federabschnitt (107-1) zum Eingreifen in eine erste Seite der Nut des Anschlussstutzens, einen zweiten Federabschnitt (107-2) zum Eingreifen in eine zweite Seite der Nut des Anschlussstutzens und einen Druckabschnitt (107-3) zum Drücken der Feder (107) in Richtung des Einsteckstutzens (101) umfasst, und
einem Anschlag (109-1, 109-2) zum Spreizen des ersten und des zweiten Federabschnittes (107-1, 107-2) beim Drücken des Druckabschnittes (107-3);
**dadurch gekennzeichnet, dass** der erste Federabschnitt (107-1) und der zweite Federabschnitt (107-2) über kreuz federnd mit dem Druckabschnitt (107-3) verbunden sind, und dass der Anschlag (109-1, 109-2) derart angeordnet ist, dass beim Drücken auf den Druckabschnitt (107-3), eine Hebelübersetzung auf den ersten Federabschnitt (107-1) und den zweiten Federabschnitt (107-2) ausgeübt wird.

2. Steckverbinder (100) nach einem der vorangehenden Ansprüche, wobei die Feder (107) aus gebogenem Runddraht gebildet ist.

3. Steckverbinder (100) nach einem der vorangehenden Ansprüche, wobei der Steckverbinder (100) einen Sicherungsvorsprung (111) zum Fixieren der Feder (107) gegen ein Herausziehen umfasst.

4. Steckverbinder (100) nach Anspruch 3, wobei der Sicherungsvorsprung (111) keilförmig ausgebildet ist, so dass die Feder (107) beim Einsetzen in den Steckverbinder (100) über den Sicherungsvorsprung (111) gleiten kann.

5. Steckverbinder (100) nach einem der vorangehenden Ansprüche, wobei der Steckverbinder (100) einen Abstandshalter (113) zum gegenseiteigen Beabstanden des ersten Federabschnitts (107-1) und des zweiten Federabschnitts (107-2) umfasst.

6. Steckverbinder (100) nach Anspruch 5, wobei der Abstandshalter (113) auf einer Seite des Steckverbinders (100) angeordnet ist, die dem Druckabschnitt (107-3) gegenüberliegt.

7. Steckverbinder (100) nach einem der vorangehenden Ansprüche, wobei der Steckverbinder (100) einen ersten Anschlag (109-1) zum Spreizen des ersten Federabschnitts (107-1) und einen zweiten Anschlag (109-2) zum Spreizen des zweiten Federabschnitts (107-2) umfasst.

8. Steckverbinder (100) nach einem der vorangehenden Ansprüche, wobei der Druckabschnitt (107-3) durch einen geraden Abschnitt der Feder (107) gebildet wird.

9. Steckverbinder (100) nach einem der vorangehenden Ansprüche, wobei der Steckverbinder (100) ein Federgehäuse (115) zum Aufnehmen der Feder (107) umfasst.

10. Steckverbinder (100) nach Anspruch 9, wobei das Federgehäuse (115) eine bogenförmige Ausnehmung (117) im Bereich des Druckabschnittes (107-3) umfasst.

11. Steckverbinder (100) nach Anspruch 9 oder 10, wobei das Federgehäuse (115) seitlich geschlossen ist.

12. Steckverbinder (100) nach einem der vorangehenden Ansprüche, wobei der Steckverbinder (100) Stutzrippen (119) zum Abstützen des Steckverbinders (100) an dem Anschlussstutzen umfasst.

13. Steckverbinder (100) nach Anspruch 3, wobei der Anschlag (109-1, 109-2) eine Zentrierrippe (119) zum Abstützen des Steckverbinders (100) an dem Anschlussstutzen umfasst.

## Claims

1. Connector (100) for establishing a fluid connection, comprising:
an inserting nozzle (101) for inserting in a connection nozzle (103), which comprises an outer circumferential groove (105);
a spring (107) for locking the inserting nozzle (101) to the connection nozzle, which comprises a first spring section (107-1) for engaging in a first side of the groove of the connection nozzle, a second spring section (107-2) for engaging in a second side of the groove of the connection nozzle and a pressing section (107-3) for pressing the spring (107) in direction of the inserting nozzle (101), and
a stopper (109-1, 109-2) for spreading the first and the second spring section (107-1, 107-2) during pressing the pressing section (107-3);
**characterized in that** the first spring section (107-1) and the second spring section (107-2) are crosswise resiliently connected with the pressing section (107-3), and that the stopper (109-1, 109-2) is arranged in such a way that during pressing on the pressing section (107-3), a lever transmission is exerted on the first spring section (107-1) and the second spring section (107-2).

2. Connector (100) according to any one of the preceding claims, wherein the spring (107) is formed out of curved round wire.

3. Connector (100) according to any one of the preceding claims, wherein the connector (100) comprises a security protrusion (111) for fixing the spring (107) against a withdrawal.

4. Connector (100) according to claim 3, wherein the security protrusion (111) is formed in a wedge-shaped manner, so that the spring (107) can glide in the connector (100) via the security protrusion (111) during insertion.

5. Connector (100) according to any one of the preceding claims, wherein the connector (100) comprises a spacer (113) for spacing the first spring section (107-1) and the second spring section (107-2) from each other.

6. Connector (100) according to claim 5, wherein the spacer (113) is arranged on one side of the connector (100), which lies opposite the pressing section (107-3).

7. Connector (100) according to any one of the preceding claims, wherein the connector (100) comprises a first stopper (109-1) for spreading the first spring section (107-1) and a second stopper (109-2) for spreading the second spring section (107-2).

8. Connector (100) according to any one of the preceding claims, wherein the pressing section (107-3) is formed by a straight section of the spring (107).

9. Connector (100) according to any one of the preceding claims, wherein the connector (100) comprises a spring housing (115) for accommodating the spring (107).

10. Connector (100) according to claim 9, wherein the spring housing (115) comprises an arc-shaped cavity (117) in the region of the pressing section (107-3).

11. Connector (100) according to claim 9 or 10, wherein the spring housing (115) is laterally closed.

12. Connector (100) according to any one of the preceding claims, wherein the connector (100) comprises supporting ribs (119) for supporting the connector (100) onto the connection nozzle.

13. Connector (100) according to claim 3, wherein the stopper (109-1, 109-2) comprises a centering rib (119) for supporting the connector (100) onto the connection nozzle.

## Revendications

1. Connecteur à fiches (100) pour fabriquer une connexion de fluide, comportant:
une partie d'insertion (101) pour l'insertion dans un manchon de raccordement (103) qui comporte une rainure périphérique extérieure (105);
un ressort (107) pour bloquer la partie d'insertion (101) dans le manchon de raccordement qui comporte une première section de ressort (107-1) pour s'engager dans une première partie de la rainure du manchon de raccordement, une deuxième section de ressort (107-2) pour s'engager dans une deuxième partie de la rainure du manchon de raccordement et une section de pression (107-3) pour presser le ressort (107) vers la partie d'insertion (101), et une butée (109-1, 109-2) pour écarter la première et la deuxième section de ressort (107-1, 107-2) lorsqu'on presse la section de pression (107-3);
**caractérisé en ce que** la première section de ressort (107-1) et la deuxième section de ressort (107-2) sont liées élastiquement de façon croisée avec la section de pression (107-3), et que la butée (109-1, 109-2) est disposée de telle sorte qu'un mécanisme à levier est appliqué sur la première section de ressort (107-1) et la deuxième section de ressort (107-2) lorsqu'on presse sur la section de pression (107-3).

2. Connecteur à fiches (100) selon l'une des revendications précédentes, dans lequel le ressort (107) est formé à partir d'un fil rond courbé.

3. Connecteur à fiches (100) selon l'une des revendications précédentes, dans lequel le connecteur à fiches (100) comporte une saillie de sécurité (111) pour fixer le ressort (107) contre une extraction.

4. Connecteur à fiches (100) selon la revendication 3, dans lequel la saillie de sécurité (111) est formée de façon cunéiforme, de telle sorte que le ressort (107) peut glisser sur la saillie de sécurité (111) lors de l'insertion dans le connecteur à fiches (100).

5. Connecteur à fiches (100) selon l'une des revendications précédentes, dans lequel le connecteur à fiches (100) comporte un élément d'espacement (113) pour espacer réciproquement la première section de ressort (107-1) et la deuxième section de ressort (107-2).

6. Connecteur à fiches (100) selon la revendication 5, dans lequel l'élément d'espacement (113) est disposé sur un côté du connecteur à fiches (100), qui se trouve en face de la section de pression (107-3).

7. Connecteur à fiches (100) selon l'une des revendications précédentes, dans lequel le connecteur à fiches (100) comporte une première butée (109-1) pour écarter la première section de ressort (107-1) et une deuxième butée (109-1) pour écarter la deuxième section de ressort (107-2).

8. Connecteur à fiches (100) selon l'une des revendications précédentes, dans lequel la section de pression (107-3) est formée à partir d'une section droite du ressort (107).

9. Connecteur à fiches (100) selon l'une des revendications précédentes, dans lequel le connecteur à fiches (100) comporte un boîtier de ressort (115) pour recevoir le ressort (107).

10. Connecteur à fiches (100) selon la revendication 9, dans lequel le boîtier de ressort (115) comporte un évidement (117) de forme arquée dans la région de la section de pression (107-3).

11. Connecteur à fiches (100) selon la revendication 9 ou 10, dans lequel le boîtier de ressort (115) est fermé latéralement.

12. Connecteur à fiches (100) selon l'une des revendications précédentes, dans lequel le connecteur à fiches (100) comporte des nervures de support (119) pour supporter le connecteur à fiches (100) au niveau du manchon de raccordement.

13. Connecteur à fiches (100) selon la revendication 3, dans lequel la butée (109-1, 109-2) comporte une nervure de centrage (119) pour supporter le connecteur à fiches (100) au niveau du manchon de raccordement.
